(19)

Europäisches
Patentamt
European
Patent Office
Office européen
des brevets

(11) **EP 2 141 957 A1**

(12) **EUROPEAN PATENT APPLICATION**

(43) Date of publication:
**06.01.2010 Bulletin 2010/01**

(51) Int Cl.:
***H04W 64/00*** (2009.01)

(21) Application number: **08011925.8**

(22) Date of filing: **02.07.2008**

<table>
<tr><td>

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicants:
- **IBBT vzw**
  **9050 Gent (BE)**
- **Vrije Universiteit Brussel**
  **1050 Brussel (BE)**

</td><td>

(72) Inventors:
- **Enescu, Valentin**
  **1170 Brussels (BE)**
- **Batarilo, Zvonimir**
  **1190 Brussels (BE)**
- **Sahli, Hichem**
  **1050 Brussels (BE)**

(74) Representative: **BiiP cvba**
  **Culliganlaan 1B**
  **1831 Diegem (Bruxelles) (BE)**

</td></tr>
</table>

(54) **System and method for position estimation**

(57)    The present invention is related to a method for estimating the location of a target device in a wireless network, whereby the wireless network comprises a plurality of reference stations. The method comprises the steps of
- measuring with the target device a signal parameter of a set of signals received from the reference stations,
- deriving an expression of the target device's location likelihood by linking the measured signal parameter values of the received signals to an empirical statistical model expressing the relationship between values of the signal parameter and either the distance between the target device and the reference stations or the position of the target device, and
- estimating the location of the target device via the location likelihood expression.

Fig.1a

**Fig.1b**

**Description**

**Field of the Invention**

The present invention generally relates to the field of positioning methods and systems for estimating the position of a receiver or target device in a wireless telecommunication environment.

**Background of the Invention**

In recent years, a growing interest for indoor location-aware systems and services was fostered by the proliferation of wireless (sensor) networks. Indeed, there are several promising wireless LAN (WLAN) or wireless PAN (WPAN) communication technologies to support location estimation applications such as Bluetooth, Wi-Fi, Zigbee, Wi-Max or even Ultra Wideband. Indoor wireless positioning systems employ at least one of the available physical parameters of the medium for location estimation. The typical features that can be used are the received signal strength (RSS) of communication, the angle of arrival (AOA) of the signal and the time difference of arrival (TDOA). Unlike outdoor counterpart systems which can use AOA and TDOA techniques effectively, indoor positioning systems encounter the non-line-of-sight propagation problem and the dense multipath effect that render these two techniques ineffective or complex and expensive for practical implementations. In contrast, RSS is the only parameter that is measurable with (reasonably priced) currently existing commercial hardware.

Existing approaches to RSS-based positioning fall into two main categories. The solutions are either based on propagation models (translating the RSS measurements into distances based on which a positioning algorithm estimates the location by triangulation) or on "fingerprinting" (based on matching the RSS measurements against a database of location-RSSI measurements).

The 'propagation model' techniques assume knowledge about the locations of the reference nodes (fixed wireless devices like base stations) and then model the propagation of the signals through space to determine the expected signal strength at any location based on the distance from a reference node. Unfortunately, these parametric models have only limited accuracy, even when taking information about the locations of walls and furniture into account. Patent document US 6990428 proposes a solution of this type. It uses deterministic propagation models with a one-to-one (or unimodal) correspondence between the measurement and the distance. This also holds for papers in the technical literature, see e.g. 'Modelling of Indoor Positioning systems based on Location Fingerprinting' (Kaemarungsi et al., presented at IEEE Infocom 2004) and 'Network-based wireless location: challenges faced in developing techniques for accurate wireless location information' (A. Sayed et al., IEEE Signal Processing Magazine, vol.22, no.4, pp.22-40, 2005).

The 'fingerprinting' techniques relate the measurements directly to the location (not indirectly, via the distance to the reference node) by computing position likelihoods using location specific statistics (fingerprints) extracted from calibration data. These local statistics include histograms, Gaussian distributions or even raw measurements. These approaches, also known as location fingerprinting systems, typically result in higher localization accuracy if enough calibration data is available.

Positioning systems based on fingerprinting further suffer from the drawback that they require a mandatory time-consuming calibration operation each time the topology of the environment changes (for example, when furniture is moved or cubicles are added in an indoor environment) or at each installation of the system, hence, in situations where no calibration data is available to generate likelihoods at possible locations.

Most patent documents on indoor positioning propose 'fingerprinting' solutions. For example, patent document US7228136-B1 relates to a method for estimating a receiver's location in a wireless communication network. The communication network comprises a number of channels for simultaneous communication, each channel having at least one signal parameter (e.g. signal strength) that varies with location differently from the other channels. The first step of the method consists in the determination of a set of calibration data, whereby each calibration data set comprises the location of the respective calibration point and at least one measured signal parameter for each of several channels at that calibration point. On the basis of the sets of calibration data, a statistical model is maintained of the signal parameters of the several channels versus a receiver's location in the wireless telecommunication network. Next at least one signal parameter is measured for each of the several channels at the receiver and the location of the receiver is estimated on the basis of the statistical model and the measured signal parameters of the several channels at the receiver. The statistical model is thus able to predict the receiver's location given a plurality of current observations at the receiver site. The model is maintained based on the calibration data. The calibration data comprises data records each of which comprises the location of the calibration point in question and the set of signal parameters measured at that calibration point. In order to be able to estimate the location of a mobile terminal the statistical model employs the probability distribution or a probability density function over the possible locations. The model can be either a conditional model giving probability distribution in the form of the probability of being at a given location, conditional on the measured signal strength values or a joint model giving the joint probability of being at a certain location and having certain measured parameter values.

Patent application US2005/131635-A1 relates to an improvement of the above-described technique. It discloses a method for determining an error estimate concerning a target device's location, whereby the target device can move in a wireless environment. A probabilistic model of the wireless environment is maintained that indicates a probability distribution for signal values at several sample points in the wireless environment. A set of observations is made of signal values in the wireless environment at the target device's location. The target device's location is estimated based on the probabilistic model and the set of observations. Next the error estimate is determined as a combination of products over several sample points, each product comprising a probability for the sample point in question being the target device's location and a distance function between the sample point in question and the target device's estimated location. In this way a reliability measure of the positioning technique is obtained.

## Aims of the invention

The present invention aims to provide a method and system for position estimation that overcomes the drawbacks of the prior art solutions.

## Summary

The present invention relates to a method for estimating the location of a target device in a wireless network that comprises a plurality of reference stations. These reference stations are typically base stations. The method comprises the steps of

- measuring with the target device a signal parameter of a set of signals received from the reference stations,
- deriving an expression of the target device's location likelihood by linking the measured signal parameter values of the received signals to an empirical statistical model expressing the relationship between values of the signal parameters and the distance between the target device and the reference stations or the relationship between values of said signal parameter and the position of the target device, and
- estimating the location of the target device via said location likelihood expression.

In a preferred embodiment of the invention the signal parameter used is the signal strength. The set of signals advantageously comprises at least three signals, such that triangulation can be applied.

In an embodiment of the invention the method further comprises a step of building the empirical statistical model. In this step measured signal parameter values are preferably transformed from a discrete to a continuous form. This transformation advantageously involves the use of a Gaussian mixture.

In a preferred embodiment the step of estimating the location is performed based on maximum likelihood estimation.

Advantageously the step of estimating is performed iteratively.

In a preferred embodiment the estimation is performed using at least two different initial locations.

In a preferred embodiment the wireless network is a WiFi, a ZigBee, a WiMax or a GSM network.

The method for estimating according to the present invention is advantageously operated in a client-server mode.

The invention also relates to a program, executable on a programmable device containing instructions which, when executed, perform the method as previously described.

In another aspect the invention relates to a communication device for location estimation in a wireless network. The communication device is arranged for measuring a signal parameter (typically the signal strength) of signals received from reference stations in the wireless network and is **characterised in that** it comprises storage means for storing an empirical statistical model expressing the relationship between values of the signal parameter and the distance of the communication device to the reference stations or the relationship between values of the signal parameter and the position of the communication device. The device is also characterised by a processing means arranged for estimating the location of the communication device via an expression of the location likelihood derived by linking measured signal parameter values to the empirical statistical model.

In a further aspect the invention relates to a system for location estimation of a target device. The system comprises a wireless network having a plurality of reference stations. The system is **characterised in that** it further comprises storage means for storing an empirical statistical model expressing the relationship between values of a signal parameter of signals from the reference stations and either the distance of the target device to the reference stations or the position of the target device. The system is further characterised by processing means arranged for estimating the location of the target device via an expression of the location likelihood derived by linking measured signal parameter values to the empirical statistical model.

## Brief Description of the Drawings

Fig. 1 represents two embodiments of a positioning system according to the present invention. In Fig.1A a probabilistic propagation model is applied and in Fig. 1B an empirically built fingerprinting model.

Fig. 2 represents the joint probability density distribution p(r,d) and histogram h(k,l).

Fig. 3 illustrates an example of network-based positioning system. The PC has storage means to store the empirical probabilistic models and can compute the position based on the measurements MS reports to BS2 which are transmitted to the PC via the BS2 to PC link.

## Detailed Description of Embodiment(s)

The present invention proposes using signal parameter measurements (signal strength) and an empirically built probabilistic model in a wireless location system and method. The proposed solution can be applied to indoor and outdoor positioning algorithms and systems based on propagation models as well as to those based on fingerprinting. In the former the empirically built probabilistic model is used as the propagation model, whereas in the latter it is used as fingerprinting model. An empirically built probabilistic model relates signal parameter measurements to distance or location values and is derived from measurements without resorting to any analytical model.

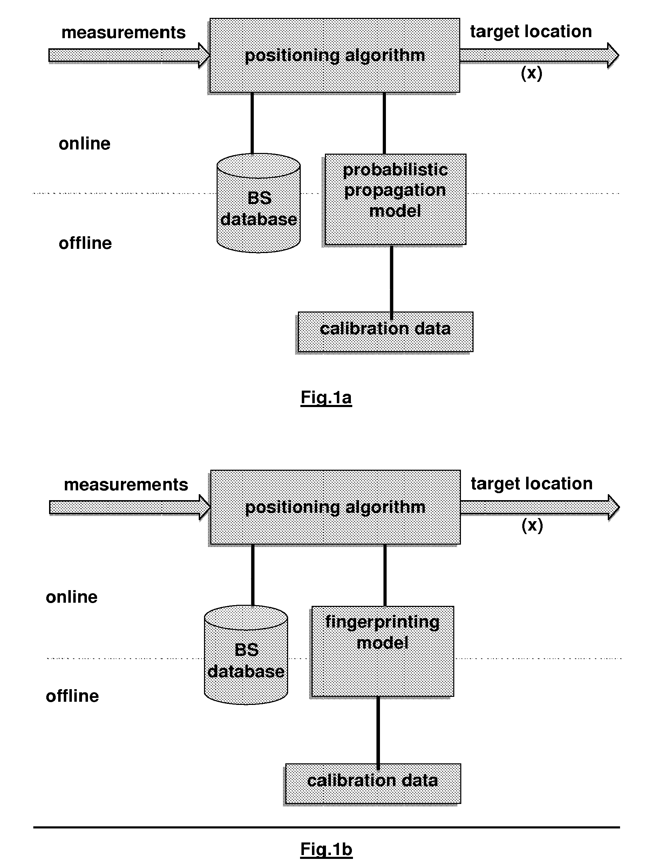

Fig. 1a depicts the block scheme of the positioning solution based on a probabilistic propagation model. Multiple pairs of measurements have been acquired in a preceding offline step by a mobile station from several base stations placed in a variety of environments. From these measurements an empirical probabilistic propagation model has been built. In the method of the invention measurements are acquired by a mobile station. Based on the propagation model and the measurements from a set of base stations a positioning algorithm determines the likelihood of the distances from the mobile station to the considered base stations and, implicitly, the likelihood of the mobile station position relative to the base stations. The positioning algorithm combines the position likelihoods of the considered base stations to render a global position likelihood function, which is then maximized to estimate the mobile station position.

Fig.1b depicts the block scheme of the positioning solution based on a probabilistic radio-fingerprint model. Again, in a preceding step, for available base stations, measurement pairs are acquired by the mobile station which is sequentially placed at locations on a grid covering an environment to be radio-fingerprinted. From these measurements an empirical probabilistic radio-fingerprint model has been built for each base station. Based on the measurements from the considered base stations and the corresponding radio-fingerprint models, the positioning algorithm determines the position likelihood for each base station. Finally, the positioning algorithm combines the position likelihoods of the considered base stations to render a global position likelihood function, which is then maximized to estimate the MS position.

An embodiment based on a propagation model is discussed now. The proposed solution comprises three parts. First, to evaluate the distance between two wireless devices (a target device - say, a mobile station (MS)- and a base station) using the received signal strength measurements (RSSI) of the radio signal, an empirical probabilistic propagation model is elaborated relating the RSSI value to the distance between the two devices. More specifically, this model is estimated using a multitude of (distance, rss) measurements, which are quantized and then brought to a continuous form by interpolation with Gaussian kernels. In this way, the propagation model is expressed by the conditional density $p(rss \mid distance)$ in the form of a Gaussian mixture that properly accounts for the possibility that different RSS values may correspond to the same distance (or one RSSI value may correspond to multiple distances). This behaviour of the RSS measurements is due to multipath propagation and the variety of propagation conditions within indoor environments.

Second, given $M$ reference base stations with known positions and a set of RSSI values $\{rss_1,...,rss_M\}$ measured by a mobile station (MS) with respect to these base stations, an expression is formulated of the total MS position likelihood, $p(rss_1,rss_2,...,rss_M \mid \mathbf{x})$ by combining the position likelihood $p(rss_i \mid \mathbf{x})$ of each measurement ($i$ = 1, ..., $M$). The (2D or 3D) location of the mobile station is denoted by $\mathbf{x}$, while $\mathbf{x}_i$ (see below) represents the location of the $i$-th base station. Each such likelihood is derived from the probabilistic propagation model $p(rss_i \mid \mathbf{x}) = p(rss_i \mid d(\mathbf{x},\mathbf{x}_i))$, where $d(\mathbf{x}, \mathbf{x}_i)$ denotes the distance between the mobile station and the $i$-th base station.

Third, an algorithm is proposed to estimate the MS location by maximizing the total likelihood function $p(rss_1, rss_2,...,rss_M \mid \mathbf{x})$. Since directly optimizing such a complex function is intractable, a lower-bound maximization approach of the log-likelihood log $p(rss_1,rss_2,...,rss_M \mid \mathbf{x})$ is adopted. The lower-bound function can be readily maximized in an iterative manner by starting from an arbitrary initial location. Further, to find a strong local maximum, several initial locations can be employed around the area where the base station are situated, thereby allowing the optimization algorithm to select among the obtained location estimates the location candidate with the highest likelihood.

The above-mentioned three phases are now described with mathematical details. It is shown how to build the empirical model, how to determine the position likelihood from a set of RSS measurements and the propagation model and how to optimize the likelihood function to estimate the mobile station location.

Propagation model

Building a propagation model amounts to specifying how the RSS measurement $r$ vary with the distance $d$ between the mobile station (MS) and the base station (BS). Since the measurements are affected by various sources of errors such as multi-path propagation causing constructive and destructive interference (fading), environmental noise and electronic device noise, the dependency of the measurement on distance is described in a statistical way by means of the conditional probability distribution $p(r \mid d)$:

$$ r : \quad p_i(r \mid d_i(\mathbf{x})), \qquad \qquad (eq.1) $$

where $\mathbf{x}$ is the unknown MS location, $\mathbf{x}_i$ is the location of the base station $i$, and $d_i(\mathbf{x}) = \|\mathbf{x} - \mathbf{x}_i\|$ is the MS-BS distance. It is to be noted that $r$ is not related directly to the location as is the case with a fingerprinting solution, but indirectly through the nonlinear function $d(\mathbf{x})$.

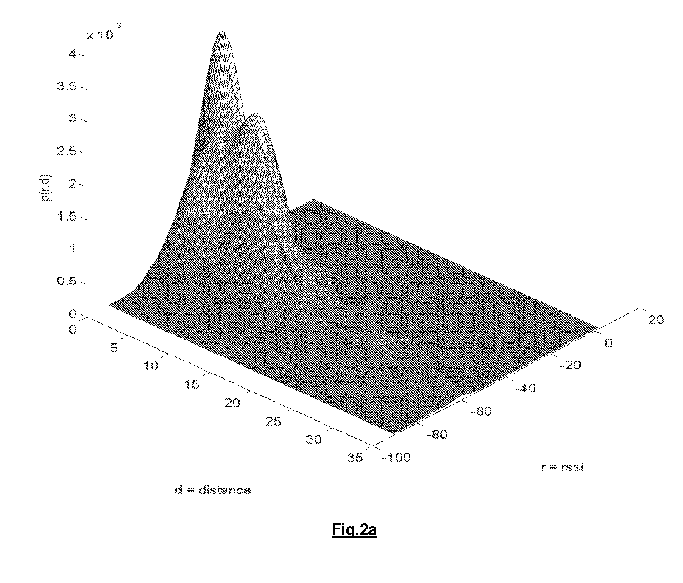

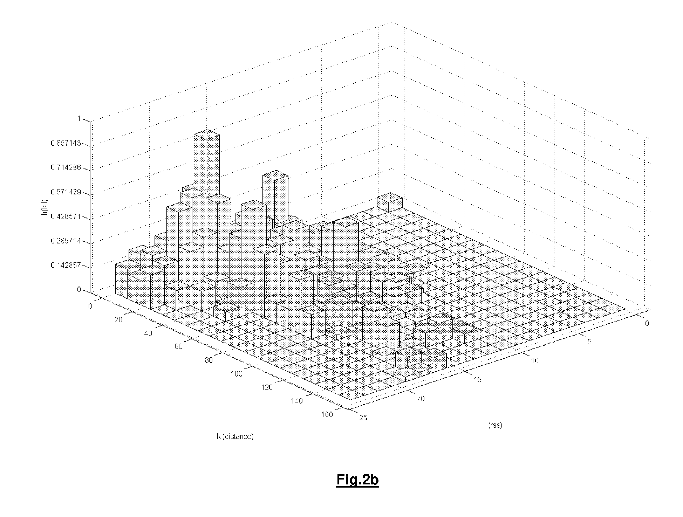

Since the analysis of the experimental data shows it is difficult to establish an analytical relationship between RSS and distance (as in open air), a joint distribution function $p(r,d)$ is empirically built from a collection of (RSS, distance) pair measurements. To this end, we proceed in two steps. First, a bi-dimensional histogram $h(k,l)$ is built by counting the number of measurements that fit the bins of centers $(\bar{r}_k, \bar{d}_l)$ and size $(\Delta_r, \Delta_d)$, where $\bar{r}_k = \Delta_r \cdot (k-0.5)$ and $\bar{d}_l = \Delta_d \cdot (l-0.5)$, $k = 1...N_r$, $l = 1,...,N_d$. Thereafter, $h(k,l)$ is normalized such that $\Sigma_k \Sigma_l h(k,l) = 1$. Second, since $h(k,l)$ is a discrete probabilistic representation of $p(r,d)$, it is transformed (see Fig.2) into a continuous one by using a Parzen window approach and Gaussian kernels:

$$ p(r,d) = \sum_{k=1}^{N_r} \sum_{l=1}^{N_d} w_{kl} \cdot \mathrm{N}\left([r\,d];[\bar{r}_k\,\bar{d}_l], \begin{pmatrix} \sigma_r^2 & 0 \\ 0 & \sigma_d^2 \end{pmatrix}\right) \qquad (eq.\ 2) $$

where $w_{kl} = h(k,l)$ is a weight factor indicative of the histogram value for the bins $(k,l)$ and $\sigma_r$, $\sigma_d$ are constants determined according to the desired smoothness of the $p(r,d)$ distribution. $N_r$ denotes the number of bins for the signal strength values and $N_l$ the number of bins for the distance values. $N(...)$ denotes a Gaussian distribution with mean vector [r d]

and covariance matrix $\begin{pmatrix} \sigma_r^2 & 0 \\ 0 & \sigma_d^2 \end{pmatrix}$. Note that $r$ and $d$ are assumed to be not correlated, so the distribution can be written as

$$ p(r,d) = \sum_{k=1}^{N_r} \sum_{l=1}^{N_d} w_{kl} \cdot \mathrm{N}\,(r; \bar{r}_k, \sigma_r^2) \cdot \mathrm{N}\,(d; \bar{d}_l, \sigma_d^2) \qquad (eq.3) $$

Equation (3) implies that p$(r,d)$ is a mixture of Gaussian kernels. This type of distribution perfectly fits the experimental observation that, due to the indoor propagation vagaries, multiple distance values may correspond to the same RSS value and conversely, different RSS values can be measured for the same distance (for example, when including a wall or not). It should be noted that any probability distribution can be expressed as a combination of Gaussian mixtures.

At this point, the distribution $p(r \mid d)$ can be found using the conditional distribution formula:

$$ p(r \mid d) = \frac{p(r,d)}{p(d)} \qquad (eq.4) $$

The distribution of the distance $p(d)$ can be found by marginalizing $p(r,d)$ :

$$p(d) = \int p(r,d)dr \quad = \sum_{k=1}^{N_r}\sum_{l=1}^{N_d} w_{kl} \cdot \mathrm{N}\,(d;\bar{d}_l,\sigma_d^2) = \sum_{l=1}^{N_d}\mathrm{N}\,(d;\bar{d}_l,\sigma_d^2)(\sum_{k=1}^{N_r}w_{kl})$$
$$= \sum_{l=1}^{N_d} w_l \cdot \mathrm{N}\,(d;\bar{d}_l,\sigma_d^2), \qquad (eq.5)$$

where. $w_l \stackrel{\Delta}{=} \sum_{k=1}^{N_r} w_{kl}$ .

Position likelihood

Each measurement defines a locus upon which the MS can be located, but is not enough to precisely locate the MS. However, estimating the MS position is possible by combining a set of measurements (preferably, at least three) from different base stations. Assuming that $M$ such measurements are available, $\{r_j\}_{j=1....M}$, one can find the MS position by maximum likelihood estimation. This boils down to optimizing the position likelihood function $p(r_1,...,r_M \mid \mathbf{x})$. Since the measurements are independent (i.e. uncorrelated as they correspond to different base stations), one can write the likelihood function as

$$p(r_1,\ldots,r_M \mid \mathbf{x}) = \prod_{j=1}^{M} p(r_j \mid d_j(\mathbf{x})). \qquad (eq.6)$$

Then, the log-likelihood $L(\mathbf{x})$ is defined as the logarithm of the likelihood function and can be expressed as a sum :

$$L(\mathbf{x}) \cong \log p(r_1,\ldots,r_M \mid \mathbf{x}) = \sum_{j=1}^{M} \log p(r_j \mid d_j(\mathbf{x})). \qquad (eq.7)$$

Further, taking into account (4) the log-likelihood function becomes

$$L(\mathbf{x}) = \sum_{j=1}^{N} \log p(r_j,d_j(\mathbf{x})) - \sum_{j=1}^{N} \log p(d_j(\mathbf{x})) \qquad (eq.8)$$

Substituting the distributions $p(r,d)$ and $p(d)$ from (3) and (5) into (8) yields

$$L(\mathbf{x}) = L_1(\mathbf{x}) + L_2(\mathbf{x}) \qquad (eq.9)$$

where

$$L_1(\mathbf{x}) \cong \sum_{j=1}^{M} \log \sum_{k=1}^{N_r}\sum_{l=1}^{N_d} w_{kl} \cdot \mathrm{N}\,(r_j;\bar{r}_k,\sigma_r^2)\cdot \mathrm{N}\,(d_j(\mathbf{x});\bar{d}_l,\sigma_d^2) \qquad (eq.10)$$

$$L_2(\mathbf{x}) \cong -\sum_{j=1}^{M} \log \sum_{l=1}^{N_d} w_l \cdot N\,(d_j(\mathbf{x}); \overline{d}_l, \sigma_d^2) \qquad \text{(eq.11)}$$

and $d_j(x) = \| x - x_j \|$ is the distance between the position vectors x and $x_j$.

Maximum likelihood estimation

ML estimation is a popular statistical method used to calculate the best way of fitting a mathematical model to some data. In this case, the MLE method can be applied to estimate the position vector $\mathbf{x}$ that matches a set of the RSS measurements from different base stations. To this end, one has to find the value $\hat{\mathbf{x}}_{ml}$ that maximizes the log-likelihood function given by (9):

$$\hat{\mathbf{x}}_{ml} = \arg\max_{\mathbf{x}} L(\mathbf{x}). \qquad \text{(eq.12)}$$

The value $\hat{\mathbf{x}}_{ml}$ is referred to as the maximum likelihood estimate of the position.
Thus, one is facing the challenging problem of maximizing $L(\mathbf{x})$. As applying various gradient-based techniques proves inefficient and unreliable, a lower bound optimization approach is proposed.

Likelihood maximization

A lower bound for $L(\mathbf{x})$ is determined, which in turn requires finding lower bounds for $L_1(x)$ and $L_2(x)$. Thereafter, $L(\mathbf{x})$ is optimized by maximizing its lower bound.
By applying $M$ times a form of Jensen's inequality for the logarithmic function (see Appendix I and take $f(\mathbf{x})=d_j$ (x) in Eq. (43)), the lower bound $B_1(\mathbf{x}, \{\lambda_{jkl}\})$ is obtained for $L_1(x)$ :

$$L_1(\mathbf{x}) \geq B_1(\mathbf{x}, \{\lambda_{jkl}\}) \cong \sum_{j=1}^{M}\sum_{k=1}^{N_r}\sum_{l=1}^{N_d} \lambda_{jkl} \log \frac{w_{kl} \cdot N\,(r_j; \overline{r}_k, \sigma_r^2) \cdot N\,(d_j(\mathbf{x}); \overline{d}_l, \sigma_d^2)}{\lambda_{jkl}}, \qquad \text{(eq.13)}$$

where $\{\lambda_{jkl}\}$ is a collection of variables satisfying the constraints

$$\sum_{k=1}^{N_r}\sum_{l=1}^{N_d} \lambda_{jkl} = 1, \quad j = 1 \ldots M. \qquad \text{(eq.14)}$$

Although $L_2(x)$ is not a 'full' concave function (as its graphical representation consists of a convex surface with bumps), it is experimentally observed that by increasing $\sigma_d$ the function's surface becomes very smooth and can therefore assimilated with a convex function. Consequently, one has that $L_2(\mathbf{x})$ is greater than or equal to the tangent plane in a point $\mathbf{x}^*$:

$$L_2(\mathbf{x}) \geq B_2(\mathbf{x}, \mathbf{x}^*) \cong L_2(\mathbf{x}^*) + \nabla L_2(\mathbf{x}^*)^T \cdot (\mathbf{x} - \mathbf{x}^*), \qquad \text{(eq.15)}$$

where $\nabla L_2(\mathbf{x}^*)$ is the gradient of $L_2(x)$ at the point $\mathbf{x}^*$. Note that the equality in Eq.15 is established for $\mathbf{x} = \mathbf{x}^*$.
Now the lower bound maximization is discussed. Starting the position estimation with a guess $\mathbf{x}^{(0)}$, a sequence of position vectors $\mathbf{x}^{(1)}, \mathbf{x}^{(2)}, \ldots \mathbf{x}^{(n)}$ shall be generated that progressively increase $L(\mathbf{x})$ and eventually converge to a point corresponding to a local maximum of the likelihood. This will be accomplished in two steps.
In a '$\lambda$ step', given a current estimate $\mathbf{x}^{(n-1)}$ of $\mathbf{x}$, the set $\{\lambda_{jkl}\}$ is to be found that maximizes $B_1(\mathbf{x}^{(n-1)}, \lambda_{jkl})$ subject

to constraints (eq. 14)

$$\lambda_{jkl}^{(n-1)} = \arg\max_{\lambda_{jkl}} B_1(\mathbf{x}^{(n-1)}, \lambda_{jkl}) \quad \text{s.t.} \quad \sum_{k,l} \lambda_{jkl} = 1, \quad j = 1, \ldots, M \qquad \text{(Eq.17)}$$

It can easily be shown that

$$B_1(\mathbf{x}^{(n-1)}, \lambda_{jkl}^{(n-1)}) = L_1(\mathbf{x}^{(n-1)}) \qquad \text{(Eq.18)}$$

In a 'x step' the vector $\mathbf{x}$ is to be found that maximizes the expression $B_1(\mathbf{x}, \lambda_{jkl}^{(n-1)}) + B_2(\mathbf{x}, \mathbf{x}^{(n-1)})$:

$$\mathbf{x}^{(n)} = \arg\max_{\mathbf{x}} B_1(\mathbf{x}, \lambda_{jkl}^{(n-1)}) + B_2(\mathbf{x}, \mathbf{x}^{(n-1)}). \qquad \text{(Eq.19)}$$

When repeatedly applying these two steps, each successive iteration generates an estimate of $\mathbf{x}$ with an increased likelihood, as follows:

$$
\begin{aligned}
& B_1(\mathbf{x}^{(0)}, \lambda_{jkl}^{(0)}) + B_2(\mathbf{x}^{(0)}, \mathbf{x}^{(0)}) = L(\mathbf{x}^{(0)}) \\
\leq \quad & B_1(\mathbf{x}^{(1)}, \lambda_{jkl}^{(0)}) + B_2(\mathbf{x}^{(1)}, \mathbf{x}^{(0)}) \\
\leq \quad & B_1(\mathbf{x}^{(1)}, \lambda_{jkl}^{(1)}) + B_2(\mathbf{x}^{(1)}, \mathbf{x}^{(1)}) = L(\mathbf{x}^{(1)}) \\
& \cdots \\
\leq \quad & B_1(\mathbf{x}^{(n-1)}, \lambda_{jkl}^{(n-1)}) + B_2(\mathbf{x}^{(n-1)}, \mathbf{x}^{(n-1)}) = L(\mathbf{x}^{(n-1)}) \\
\leq \quad & B_1(\mathbf{x}^{(n)}, \lambda_{jkl}^{(n-1)}) + B_2(\mathbf{x}^{(n)}, \mathbf{x}^{(n-1)}) \\
\leq \quad & B_1(\mathbf{x}^{(n)}, \lambda_{jkl}^{(n)}) + B_2(\mathbf{x}^{(n)}, \mathbf{x}^{(n)}) = L(\mathbf{x}^{(n)})
\end{aligned}
\qquad \text{(Eq.20)}
$$

The inequalities in (20) show that the proposed algorithm enables finding a local maximum of $L(\mathbf{x})$. The details on how to compute $\{\lambda_{jkl}^{(n)}\}$ and $\mathbf{x}^{(n)}$ are given in Appendix II.

Unlike the prior art solutions for RSSI-based positioning, i.e. 'signal fingerprinting', the system based on an empirical propagation model does not a need a calibration stage (offline phase) each time the indoor environment changes its topology (furniture moved, adding cubicles, etc) or for each installation of the system. Indeed, this system is based on the paradigm 'measure once (to build the propagation model) and re-use multiple times (to locate a mobile device in various environments)'. Consequently, the offline step can be performed only once or, for better accuracy, propagation models appropriate for specific building profiles can be built. Another advantage relates to the fact that, within the indoor environment, due to the propagation vagaries, the same signal parameter value may be measured for different distances between the mobile station and base station. Clearly, the empirical propagation model of the present invention using Gaussian mixtures is able to capture this behaviour of the measurements. Moreover, since the proposed positioning algorithm can employ this type of propagation model, a multimodal likelihood function (the peaks of the likelihood function indicate possible location candidates) is obtained as opposed to the classical, unimodal likelihood based solutions. Thus, sensible gains in accuracy are achieved as a result of selecting the MS location among multiple, very likely location candidates. While the propagation model is complex, thus mirroring the complexity of the propagation phenomenon, the positioning algorithm is fast and effective, capable of reaching real-time operation. The invention can be used in any type of wireless network: WiFi, ZigBee, WiMax, GSM, etc.

As another embodiment of the present invention a system arranged for a fingerprinting method for location estimation is now presented, wherein the fingerprints (location-specific statistics of the measured RSS) are interpolated between the calibration points via Gaussian kernels. Just as the previously discussed embodiment based on a propagation model, the fingerprinting embodiment also relies on an empirical statistical model that advantageously uses Gaussian mixtures. Both are empirical models in the sense that they are directly constructed from measurements without using any analytical model. Indeed, the propagation model results from discretizing a variety of (RSS, distance) measurements and then interpolating the discrete statistics using Gaussian kernels, thereby the joint probability distribution of RSS and distance being a Gaussian mixture. In the same way, the fingerprinting model, which relates the signal strength from a base station to the location of the target device and its azimuth with respect to the base station, is built from RSS measurements collected at discrete location and discrete azimuth. Then, a variety of measurements for a collection of discrete locations is interpolated via Gaussian kernels to render the joint distribution of RSS and location. Thus, the fingerprint model becomes a Gaussian mixture, too.

The fingerprinting method contains two phases: an offline phase and an online phase. The offline stage should be performed each time the fingerprinting positioning solution is installed in a building or when the topology of the environment changes. In the offline phase (calibration) the joint distribution is built of the RSS measurements (relative to the $k$-th base station) and the MS location $p_k(rss, \boldsymbol{x})$ based on several (RSS, location) values collected at a number of calibration points. The number of RSS values acquired per calibration point depends on how the range of 360 degrees of the azimuth angle (the angle between the MS antenna and the MS-BS direction line) is discretized. For example, a set of 8 azimuth angles $\{360.j/8; j = 0, ..., 7\}$ can be used.

In the online phase, based on the RSS measurements from several reference base stations and on information about the radio-availability of the base stations, the total location likelihood function is computed by combining the position likelihood of the target mobile station for the available base stations. Further the position is estimated by maximizing the likelihood function via a lower-bound optimization strategy.

Both phases are described with more mathematical details below.

Offline Phase (calibration)

During the offline phase, calibration data is gathered for a grid of $N$ points with known locations. For each such point, RSS measurements are acquired by a mobile station from $K$ base stations at a number of $N_\alpha$ different angles (typically 8) between the antenna of the mobile device and the north direction (azimuth). Let $\bar{r}_{ijk}$ denote the RSS measurement of the signal from base station $k$, taken at the point of position $\bar{\boldsymbol{x}}_i$, $i = 1, ..., N$, with the azimuth $j$. Note that the azimuth has a discrete value between 1 and $N_\alpha$. To be able to predict the RSS value in between the calibration points, the calibration data (the radio "fingerprints") needs to be interpolated to the whole indoor space. To this end, it is proposed to consider the position vector of a point $\boldsymbol{x}$ and the associated RSS measurement $r$ (taken at an unknown azimuth) with respect to base station $k$ as random variables and to build their joint distribution $p_k(r, \boldsymbol{x})$ by means of a Parzen window (kernel-based density estimation). Given the calibration data corresponding to base station $k$, the approximation of $p_k(r, \boldsymbol{x})$ based on Gaussian kernels is given by

$$p_k(r, \mathbf{x}); \frac{1}{\sum_{i=1}^{N}\sum_{j=1}^{N_\alpha} v_{ijk}} \sum_{i=1}^{N}\sum_{j=1}^{N_\alpha} v_{ijk} \cdot \mathsf{N}(\mathbf{x}; \bar{\mathbf{x}}_i, \Sigma_x) \mathsf{N}(r; \bar{r}_{ijk}, \sigma_r^2), \quad k = 1, ..., K, \qquad \text{(Eq.21)}$$

where $v_{ijk}$ is a binary variable which is 1 if BS $k$ is available (radio-"visible") at position $x_i$ and 0 otherwise. $\Sigma_x = \sigma_p^2 \cdot \mathbf{I}_2$ is a spatial covariance matrix, $\mathbf{I}_2$ is the 2x2 identity matrix, $\sigma_p$ is the standard deviation of the both coordinates of the position vector, and $\sigma_r$ is the standard deviation variance of the RSS measurement. These $\sigma$ parameters can be selected by taking into account the errors in the measurements as well as the desired degree of interpolation.

Online phase

In the online phase, the target device (e.g. a mobile station) moves freely within the indoor space and collects at a certain location $\boldsymbol{x}$ the RSS measurements from all the base stations, $r_1, ..., r_k$ and also stores in a binary vector $(b_1, ..., b_k)$ what base stations are radio-available at that position. Note that if $b_k = 0$, the value of $r_k$ is meaningless. To estimate the position of the target device, a maximum likelihood estimation approach is adopted. The likelihood of the position x given the RSS measurements and the radio-availability vector is

$$p(r_1,\ldots,r_K,b_1,\ldots,b_K \mid \mathbf{x}) = \prod_{k=1}^{K}\left[p_k(r_k \mid \mathbf{x})\right]^{b_k} = \prod_{k=1}^{K}\left[\frac{p_k(r_k,\mathbf{x})}{p(\mathbf{x})}\right]^{b_k}, \quad \text{(Eq.22)}$$

where $p(\mathbf{x})$ is the distribution of x approximated with Gaussian kernels :

$$p(\mathbf{x}); \quad \frac{1}{N}\sum_{i=1}^{N}\mathrm{N}(\mathbf{x};\bar{\mathbf{x}}_i,\Sigma_x). \quad \text{(Eq.23)}$$

Since $p(\mathbf{x})$ approximates in fact an uniform spatial distribution within the indoor space, it is completely uninformative so it can be excluded from the optimization process of the likelihood. The log-likelihood $L(\mathbf{x})$ is then given by

$$L(\mathbf{x}) \overset{\Delta}{=} \log p(r_1,\ldots,r_K,b_1,\ldots,b_K \mid \mathbf{x}) = \sum_{k=1}^{K}b_k \log p_k(r_k,\mathbf{x}) \quad \text{(Eq.24)}$$

Substituting (21) into (24) and excluding the factors that do not depend on x yields

$$L(\mathbf{x}) = \sum_{k=1}^{K}b_k \log \sum_{i=1}^{N}\sum_{j=1}^{N_\alpha}v_{ijk}\cdot\mathrm{N}(\mathbf{x};\bar{\mathbf{x}}_i,\Sigma_x)\mathrm{N}(r;\bar{r}_{ijk},\sigma_r^2) \quad \text{(Eq.25)}$$

The maximum likelihood estimate is then found as

$$\hat{\mathbf{x}}_{ml} = \arg\max_{\mathbf{x}} L(\mathbf{x}) \quad \text{(Eq.26)}$$

Now it is shown how $L(\mathbf{x})$ can be maximized indirectly via a lower bound approach. Applying the Jensen's inequality for the logarithmic function (see Appendix 1) a lower bound $B(\mathbf{x},\{\gamma_{ijk}\})$ is obtained for $L(\mathbf{x})$ :

$$L(\mathbf{x}) \geq B(\mathbf{x},\{\gamma_{ijk}\}) \overset{\Delta}{=} \sum_{k=1}^{K}b_k \sum_{i=1}^{N}\sum_{j=1}^{N_\alpha}\gamma_{ijk}\cdot v_{ijk}\cdot\log\frac{\mathrm{N}(\mathbf{x};\bar{\mathbf{x}}_i,\Sigma_x)\cdot\mathrm{N}(r_k;\bar{r}_{ijk},\sigma_r^2)}{\gamma_{ijk}}, \quad \text{(Eq.27)}$$

where $\{\gamma_{ijk}\}$ is a collection of variables satisfying the constraints

$$\sum_{i=1}^{N}\sum_{j=1}^{N_\alpha}\gamma_{ijk} = 1, \quad k = 1,\ldots,K, \quad \text{(Eq.28a)}$$

and

$$\gamma_{ijk} = 0 \quad \text{if } v_{ijk} = 0, \quad j = 1,\ldots,N_\alpha. \quad \text{(eq.28b)}$$

The lower bound can be simplified to

$$
\begin{aligned}
B(\mathbf{x},\{\gamma_{ijk}\}) =& \sum_{k=1}^{K} b_k \sum_{i=1}^{N} \sum_{j=1}^{N_\alpha} \gamma_{ijk} \cdot v_{ijk} \cdot \log\left( \frac{1}{2\pi \,|\,\Sigma_x\,|^{1/2}} \frac{1}{\sqrt{2\pi}\sigma_r} \right) \\
&+ \sum_{k=1}^{K} b_k \sum_{i=1}^{N} \sum_{j=1}^{N_\alpha} \frac{\gamma_{ijk} \cdot v_{ijk}}{4} \left( \frac{r_k - \bar{r}_{ijk}}{\sigma_r \sigma_\rho} \right)^2 (\mathbf{x} - \bar{\mathbf{x}}_i)^T (\mathbf{x} - \bar{\mathbf{x}}_i) \quad \text{(Eq.29)} \\
&- \sum_{k=1}^{K} b_k \sum_{i=1}^{N} \sum_{j=1}^{N_\alpha} v_{ijk} \cdot \gamma_{ijk} \cdot \log \gamma_{ijk}
\end{aligned}
$$

Starting the position estimation with a guess $\mathbf{x}^{(0)}$, a sequence of position vectors $\mathbf{x}^{(1)}$, $\mathbf{x}^{(2)}$, ..., $\mathbf{x}^{(n)}$ shall be generated that progressively increase $L(\mathbf{x})$ and eventually converge to a point corresponding to a local maximum of the likelihood. This is accomplished in two steps.

In a 'γ step', given the current estimate $\mathbf{x}^{(n-1)}$ of $\mathbf{x}$, the set { $\gamma_{jkl}$} is to be found that maximizes $B(\mathbf{x}^{(n-1)}, \gamma_{ijk})$ subject to constraints (28) :

$$
\gamma_{ijk}^{(n-1)} = \arg \max_{\gamma_{ijk}} B(\mathbf{x}^{(n-1)}, \{\gamma_{ijk}\}) \qquad \text{(Eq.30)}
$$

It can easily be shown that

$$
B(\mathbf{x}^{(n-1)}, \gamma_{ijk}^{(n-1)}) = L(\mathbf{x}^{(n-1)}) \qquad \text{(Eq.31)}
$$

In the 'x step' one finds x that maximizes

$$
\mathbf{x}^{(n)} = \arg \max_{\mathbf{x}} B(\mathbf{x}, \gamma_{ijk}^{(n-1)}) \qquad \text{(Eq.32)}
$$

When repeatedly applying these two steps, each successive iteration generates an estimate of **x** with an increased likelihood, as follows:

$$
\begin{aligned}
B(\mathbf{x}^{(0)}, \gamma_{ijk}^{(0)}) &= L(\mathbf{x}^{(0)}) \\
\leq\quad B(\mathbf{x}^{(1)}, \gamma_{ijk}^{(0)}) & \\
\leq\quad B(\mathbf{x}^{(1)}, \gamma_{ijk}^{(1)}) &= L(\mathbf{x}^{(1)}) \\
&\cdots \qquad\qquad\qquad\qquad \text{(Eq.33)} \\
\leq\quad B(\mathbf{x}^{(n-1)}, \gamma_{ijk}^{(n-1)}) &= L(\mathbf{x}^{(n-1)}) \\
\leq\quad B(\mathbf{x}^{(n)}, \gamma_{ijk}^{(n-1)}) & \\
\leq\quad B(\mathbf{x}^{(n)}, \gamma_{ijk}^{(n)}) &= L(\mathbf{x}^{(n)})
\end{aligned}
$$

The inequalities in (33) show that the proposed algorithm enables finding a local maximum of L(**x**). The computation of

$\gamma_{ijk}^{(n)}$ and $\mathbf{x}^{(n)}$ can be performed as follows :

$$\gamma_{ijk}^{(n-1)} = \frac{v_{ijk} \cdot \mathbf{N}(\mathbf{x};\bar{\mathbf{x}}_i,\Sigma_x) \cdot \mathbf{N}(r_k;\bar{r}_{ijk},\sigma_r^2)}{\sum_{l=1}^{N}\sum_{m=1}^{N_\alpha} v_{lmk} \cdot \mathbf{N}(\mathbf{x};\bar{\mathbf{x}}_l,\Sigma_x) \cdot \mathbf{N}(r_k;\bar{r}_{lmk},\sigma_r^2)}, \quad i=1...N, j=1...N_\alpha, k=1...K. \qquad (Eq.34)$$

To obtain the estimate of $\mathbf{x}$ at iteration $n$, $\mathbf{x}^{(n)}$, we impose the condition:

$$\nabla_x B(\mathbf{x}^{(n)},\{\gamma_{ijk}^{(n-1)}\}) = \mathbf{0} \qquad (eq.35)$$

Substituting $B(\mathbf{x},\{\gamma_{ijk}^{(n-1)}\})$ from Eq. (29) into Eq. (35) gives

$$\sum_{k=1}^{K} b_k \sum_{i=1}^{N}\sum_{j=1}^{N_\alpha} \frac{\gamma_{ijk}^{(n-1)} \cdot v_{ijk}}{4}\left(\frac{r_k - \bar{r}_{ijk}}{\sigma_r\sigma_p}\right)^2 (\mathbf{x}^{(n)} - \bar{\mathbf{x}}_i) = \mathbf{0} \qquad (eq.36)$$

Then, by solving Eq. (36) we obtain $\mathbf{x}^{(n)}$:

$$\mathbf{x}^{(n)} = \frac{\sum_{k=1}^{K} b_k \sum_{i=1}^{N}\sum_{j=1}^{N_\alpha} \gamma_{ijk}^{(n-1)} \cdot v_{ijk}\left(\frac{r_k - \bar{r}_{ijk}}{\sigma_r\sigma_p}\right)^2 \bar{\mathbf{x}}_i}{\sum_{k=1}^{K} b_k \sum_{i=1}^{N}\sum_{j=1}^{N_\alpha} \gamma_{ijk}^{(n-1)} \cdot v_{ijk}\left(\frac{r_k - \bar{r}_{ijk}}{\sigma_r\sigma_p}\right)^2} \qquad (eq.37)$$

The invention also relates to a communication device, e.g. a mobile phone, that is capable of performing the above-described method for position location. It is well known in the art that device like mobile phones can measure a signal parameter of signals received from base stations in the mobile network. The communication device comprises storage means for storing the empirical statistical model. The communication device further comprises a suitable processing means to estimate the location of the device via an expression of the location likelihood derived by linking the measured signal parameter values to the empirical statistical model.

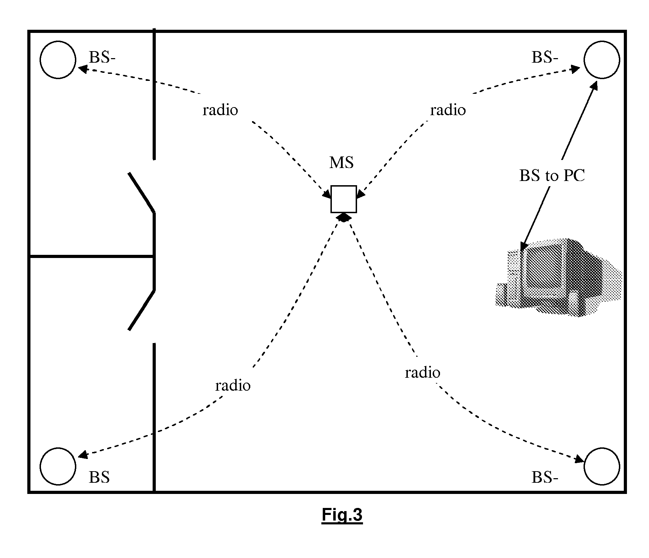

In a further aspect the invention also relates to a network-based system for location estimation of a target device. Figure 3 represents a possible configuration. The wireless network has a plurality of reference stations (base stations BS-i, $i=1,...,4$). A personal computer (PC) is linked to one of the BS to relay the measurements collected from the target device MS to the positioning software on the PC. The PC may further store the empirical statistical model expressing the relationship between RSSI values of signals from the base stations and the distance of the target device to the base stations or the relationship between RSSI values and the position of the target device. By means of the PC the location of the target device can be estimated via an expression of the location likelihood derived by linking the measured values to the empirical statistical model.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

### Annex I : Particular form of Jensen's inequality for Gaussian mixtures

Given a convex function $\phi(x)$, the numbers $x_1$, $x_2$, ..., $x_N$ and the weights $\lambda_1$, $\lambda_2$..., $\lambda_N$ satisfying $\sum_{i=1}^{N} \lambda_i = 1$, the following inequality holds

$$\phi\left(\sum_{i=1}^{N} \lambda_i x_i\right) \leq \sum_{i=1}^{N} \lambda_i \phi(x_i). \quad \text{(Eq.38)}$$

Letting $x_i = y_i/\lambda_i$ and substituting $x_i$ into (38) one has that

$$\phi\left(\sum_{i=1}^{N} y_i\right) \leq \sum_{i=1}^{N} \lambda_i \phi\left(\frac{y_i}{\lambda_i}\right). \quad \text{(Eq.39)}$$

Since the log($x$) function is concave, it follows that $\phi(x)=-\log(x)$ is a convex function. Applying the Jensen's inequality in the form (39) yields :

$$\log \sum_{i=1}^{N} y_i \geq \sum_{i=1}^{N} \lambda_i \log\left(\frac{y_i}{\lambda_i}\right). \quad \text{(Eq.40)}$$

A random vector **x** is considered with a distribution $p(x)$ being a mixture of Gaussians:

$$p(\mathbf{z}) = \sum_{i=1}^{N} w_i \cdot \mathrm{N}\,(\mathbf{z}; \mu_i, \Sigma_i), \quad \text{(Eq.41)}$$

where $w_i$ is the weight of the i-th component in the mixture and N $(\mathbf{z}; \mu_i, \sigma_i^2)$ denotes a multivariate Gaussian distribution with mean $\mu_i$ and covariance $\Sigma_i$. In order to obtain a normalized $p(\mathbf{x})$, i.e. $\int p(\mathbf{z})d\mathbf{z} = 1$ the component weights should sum to 1 :

$$\sum_{i=1}^{N} w_i = 1. \qquad \textbf{(Eq.42)}$$

The random vector z as a function of the parameter vector **x** is now considered **z** = f(**x**), letting $y_i \cong w_i \cdot$ N (f(**x**); $\mu_i$, $\Sigma_i$), i =1... N. Substituting $y_i$'s into (Eq. 40) yields an inequality involving a Gaussian mixture:

$$\log \sum_{i=1}^{N} w_i \cdot \mathrm{N} \ (f(\mathbf{x}); \mu_i, \Sigma_i) \geq \sum_{i=1}^{N} \lambda_i \log \frac{w_i \cdot \mathrm{N} \ (f(\mathbf{x}); \mu_i, \Sigma_i)}{\lambda_i}. \qquad \textbf{(eq.43)}$$

This shows that

$$B(\mathbf{x}, \lambda_1, \ldots, \lambda_N) \cong \sum_{i=1}^{N} \lambda_i \log \frac{w_i \cdot \mathrm{N} \ (f(\mathbf{x}); \mu_i, \Sigma_i)}{\lambda_i} \qquad \textbf{(Eq.44)}$$

is a lower bound for $F(\mathbf{x}) \overset{\Delta}{=} \log \sum_{i=1}^{N} w_i \cdot \mathrm{N}(f(\mathbf{x}); \mu_i, \Sigma_i)$.

The lower bound $B(\mathbf{x}, \{\lambda_i\})$ has the following properties. The values $\{\lambda_i\}$ for which the lower bound is maximised are

$$\lambda_i^{\bullet} \cong \arg\max_{\lambda_i} B(\mathbf{x}, \{\lambda_i\}) = \frac{w_i \cdot \mathrm{N} \ (f(\mathbf{x}); \mu_i, \Sigma_i)}{\sum_{j=1}^{N} w_j \cdot \mathrm{N} \ (f(\mathbf{x}); \mu_j, \Sigma_j)} \qquad \textbf{(Eq.45)}$$

The values $\{\lambda_i^*\}$ satisfy the following relation :

$$B(\mathbf{x}, \{\lambda_i^*\}) = F(\mathbf{x}). \qquad \textbf{(Eq.46)}$$

Annex II : Two step procedure for the maximization of L(**x**)

First $B_1(\mathbf{x}^{(n)}, \lambda_{jkl})$ is maximised with respect to $\lambda_{jkl}$ :

$$\lambda_{jkl}^{(n)} = \frac{w_{kl} \cdot \mathrm{N} \ (r_j; \bar{r}_k, \sigma_r^2) \cdot \mathrm{N} \ (d_j(\mathbf{x}^{(n)}); \bar{d}_l, \sigma_d^2)}{\sum_{i=1}^{N_r} \sum_{m=1}^{N_d} w_{im} \cdot \mathrm{N} \ (r_j; \bar{r}_i, \sigma_r^2) \cdot \mathrm{N} \ (d_j(\mathbf{x}^{(n)}); \bar{d}_m, \sigma_d^2)} \qquad . \qquad \textbf{(Eq.47)}$$

Then $B_1(\mathbf{x}, \lambda_{jkl}^{(n)}) + B_2(\mathbf{x})$ is maximized with respect to **x** :

$$\mathbf{x}^{(n+1)} = \arg\max_{\mathbf{x}} B(\mathbf{x}) \Rightarrow \nabla B_1(\mathbf{x}^{(n+1)}, \lambda_{jkl}^{(n)}; \mathbf{x}^{(n)}) + \nabla B_2(\mathbf{x}^{(n+1)}; \mathbf{x}^{(n)}) = 0 \quad \textbf{(Eq.48)}$$

$$B_1(\mathbf{x}, \lambda_{jkl}^{(n)}) = \sum_{j=1}^{M}\sum_{k=1}^{N_r}\sum_{l=1}^{N_d} \lambda_{jkl}^{(n)} \log N\ (d_j(\mathbf{x}); \bar{d}_l, \sigma_d^2) + \kappa_1$$

$$= -\frac{1}{2}\sum_{j=1}^{M}\sum_{k=1}^{N_r}\sum_{l=1}^{N_d} \lambda_{jkl}^{n} \frac{\left(d_j(\mathbf{x}) - \bar{d}_l\right)^2}{\sigma_d^2} + \kappa_1, \qquad\text{(Eq.49)}$$

where $k_1$ is a constant factor. Taking a first order Taylor series development of the distance function $d_j(\mathbf{x}) = \|\mathbf{x} - \mathbf{x}_j\|$ about the estimate the position at iteration $n$, $x_n$, gives :

$$d_j(\mathbf{x});\ d_j(\mathbf{x}^{(n)}) + \frac{(\mathbf{x}^{(n)} - \mathbf{x}_j)^T}{d_j(\mathbf{x}^{(n)})}(\mathbf{x} - \mathbf{x}^{(n)}) \qquad\text{(Eq.50)}$$

It follows that

$$B_1(\mathbf{x}, \lambda_{jkl}^{(n)}; \mathbf{x}^{(n)});\ -\frac{1}{2}\sum_{j=1}^{M}\sum_{k=1}^{N_r}\sum_{l=1}^{N_d} \frac{\lambda_{jkl}^{(n)}}{\sigma_d^2}\left[d_j(\mathbf{x}^{(n)}) - \bar{d}_l + \frac{(\mathbf{x}^{(n)} - \mathbf{x}_j)^T}{d_j(\mathbf{x}^{(n)})}(\mathbf{x} - \mathbf{x}^{(n)})\right]^2 + \kappa_1 \qquad\text{(Eq.51)}$$

So

$$\nabla B_1(\delta, \lambda_{jkl}^{(n)}; \mathbf{x}^{(n)});\ -\sum_{j=1}^{M}\sum_{k=1}^{N_r}\sum_{l=1}^{N_d} \frac{\lambda_{jkl}^{(n)}}{\sigma_d^2}\left[d_j(\mathbf{x}^{(n)}) - \bar{d}_l + \frac{(\mathbf{x}^{(n)} - \mathbf{x}_j)^T}{d_j(\mathbf{x}^{(n)})}\delta\right]\frac{\mathbf{x}^{(n)} - \mathbf{x}_j}{d_j(\mathbf{x}^{(n)})} \qquad\text{(Eq.52)}$$

$$B_2(\mathbf{x}; \mathbf{x}^{(n)}) \cong L_2(\mathbf{x}^{(n)}) + \nabla L_2(\mathbf{x}^{(n)})^T \cdot (\mathbf{x} - \mathbf{x}^{(n)}) \qquad\text{(Eq.53)}$$

or

$$B_2(\delta; \mathbf{x}^{(n)}) \cong L_2(\mathbf{x}^{(n)}) + \nabla L_2(\mathbf{x}^{(n)})^T \cdot \delta \qquad\text{(Eq.54)}$$

So $\nabla B_2(\delta; \mathbf{x}^{(n)})$ is a constant as follows:

$$\nabla B_2(\delta; \mathbf{x}^{(n)}) = \nabla L_2(\mathbf{x}^{(n)})$$

$$= -\sum_{j=1}^{M} \nabla \log \sum_{l=1}^{N_d} w_l \cdot \mathrm{N}\,(d_j(\mathbf{x}); \bar{d}_l, \sigma_d^2)|_{\mathbf{x}^{(n)}}$$

$$= -\sum_{j=1}^{M} \frac{\displaystyle\sum_{l=1}^{N_d} w_l \cdot \mathrm{N}\,(d_j(\mathbf{x}^{(n)}); \bar{d}_l, \sigma_d^2)(-\dfrac{d_j(\mathbf{x}^{(n)}) - \bar{d}_l}{\sigma_d^2})\nabla d_j(\mathbf{x})|_{\mathbf{x}^{(n)}}}{\displaystyle\sum_{\ell=1}^{N_d} w_\ell \cdot \mathrm{N}\,(d_j(\mathbf{x}^{(n)}); \bar{d}_\ell, \sigma_d^2)}$$

$$= \frac{1}{\sigma_d^2} \sum_{j=1}^{M} \frac{1}{\displaystyle\sum_{\ell=1}^{N_d} w_\ell \cdot \mathrm{N}\,(d_j(\mathbf{x}^{(n)}); \bar{d}_\ell, \sigma_d^2)} \sum_{l=1}^{N_d} w_l \cdot \mathrm{N}\,(d_j(\mathbf{x}^{(n)}); \bar{d}_l, \sigma_d^2)\frac{d_j(\mathbf{x}^{(n)}) - \bar{d}_l}{d_j(\mathbf{x}^{(n)})}(\mathbf{x}^{(n)} - \mathbf{x}_j)$$

(Eq.55)

Combining Eqs (48), (52) and (55) leads to

$$-\sum_{j=1}^{M}\sum_{k=1}^{N_r}\sum_{l=1}^{N_d} \frac{\lambda_{jkl}^{(n)}}{\sigma_d^2}\left[d_j(\mathbf{x}^{(n)}) - \bar{d}_l + \frac{(\mathbf{x}^{(n)} - \mathbf{x}_j)^T}{d_j(\mathbf{x}^{(n)})}\delta\right]\frac{\mathbf{x}^{(n)} - \mathbf{x}_j}{d_j(\mathbf{x}^{(n)})} + \nabla L_2(\mathbf{x}^{(n)}) = \mathbf{0} \quad \text{(Eq.56)}$$

It follows that

$$\mathbf{A}\delta = \mathbf{b} \qquad \text{(Eq.57)}$$

where

$$\mathbf{A} = \sum_{j=1}^{M}\sum_{k=1}^{N_r}\sum_{l=1}^{N_d} \frac{\lambda_{jkl}^{(n)}}{\sigma_d^2 \cdot d_j^2(\mathbf{x}^{(n)})}(\mathbf{x}^{(n)} - \mathbf{x}_j)(\mathbf{x}^{(n)} - \mathbf{x}_j)^T \quad \text{(Eq.58)}$$

and

$$\mathbf{b} = \nabla L_2(\mathbf{x}^{(n)}) - \sum_{j=1}^{M}\sum_{k=1}^{N_r}\sum_{l=1}^{N_d} \frac{\lambda_{jkl}^{(n)}}{\sigma_d^2}\frac{d_j(\mathbf{x}^{(n)}) - \bar{d}_l}{d_j(\mathbf{x}^{(n)})}(\mathbf{x}^{(n)} - \mathbf{x}_j) \quad \text{(Eq.59)}$$

From here

$$\delta = \mathbf{A}^{-1}\mathbf{b} \qquad \text{(Eq.60)}$$

and the new position estimate is

$$\mathbf{x}^{(n+1)} = \mathbf{x}^{(n)} + \delta \qquad \text{(Eq.61)}$$

Since $\nabla B(\mathbf{x}) = \mathbf{0}$ is a nonlinear equation a fixed point iteration is used to find its solution. As such $\mathbf{x}^{(n+1)}$ will play the role of the current estimate and a new estimate will be found until the difference between two consecutive estimates (i.e., $\delta$) becomes very small.

**Claims**

1. Method for estimating the location of a target device in a wireless network, said wireless network comprising a plurality of reference stations, said method comprising the steps of

   - measuring with said target device a signal parameter of a set of signals received from said reference stations,
   - deriving an expression of said target device's location likelihood by linking said measured signal parameter values of said received signals to an empirical statistical model expressing the relationship between values of said signal parameter and the distance between said target device and said reference stations or the relationship between values of said signal parameter and the position of said target device, and
   - estimating the location of said target device via said location likelihood expression.

2. Method for estimating as in claim 1, further comprising the step of building said empirical statistical model.

3. Method for estimating as in claim 2, whereby measured signal parameter values are transformed into a continuous form.

4. Method for estimating as in claim 3, whereby the transformation into a continuous form involves a Gaussian mixture.

5. Method for estimating as in claims 1 to 4, wherein the step of estimating the location is performed based on maximum likelihood estimation.

6. Method for estimating as in any of claims 1 to 5, wherein said step of estimating is performed iteratively.

7. Method for estimating as in any of the previous claims, wherein the estimation is performed using at least two different initial locations.

8. Method for estimating as in any of the previous claims, wherein said signal parameter is the signal strength.

9. Method for estimating as in any of the previous claims, wherein said set of signals comprises at least thee signals.

10. Method for estimating as in any of the previous claims, wherein said wireless network is a WiFi, a ZigBee, a WiMax or a GSM network.

11. Method for estimating as in any of the previous claims, operable in a client-server mode.

12. A program, executable on a programmable device containing instructions, which when executed, perform the method as in any of the previous claims.

13. Communication device for location estimation in a wireless network, whereby said communication device is arranged for measuring a signal parameter of signals received from reference stations in said wireless network, **characterised in that** said communication device comprises storage means for storing an empirical statistical model expressing the relationship between values of said signal parameter and the distance of the communication device to said reference stations or the relationship between values of said signal parameter and the position of said communication device and **in that** the communication device comprises a processing means arranged for estimating the location of the communication device via an expression of the location likelihood derived by linking measured signal parameter values to said empirical statistical model.

14. System for location estimation of a target device, said system comprising a wireless network having a plurality of reference stations and processing means and **characterised in that** it further comprises storage means for storing an empirical statistical model expressing the relationship between values of a signal parameter of signals from said reference stations and the distance of the target device to said reference stations or the relationship between values of said signal parameter and the position of said target device and processing means arranged for estimating the location of the target device via an expression of the location likelihood derived by linking measured signal parameter values to said empirical statistical model.

**Fig.1a**

**Fig.1b**

**Fig.2a**

**Fig.2b**

**Fig.3**

Europäisches
Patentamt

European
Patent Office

Office européen
des brevets

# EUROPEAN SEARCH REPORT

Application Number

EP 08 01 1925

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/102622 A (EKAHAU OY [FI]; MISIKANGAS PAULI [FI]; MYLLYMAEKI PETRI [FI]) 11 December 2003 (2003-12-11) * page 1, line 3 - line 30 * * page 4, line 7 - line 24 * ----- | 1-14 | INV. H04W64/00 |
| A | US 5 293 642 A (LO WING F [US]) 8 March 1994 (1994-03-08) * column 2, lines 14-20 * * column 2, lines 50-52 * ----- | 1-14 | |
| A | US 6 839 560 B1 (BAHL PARAMVIR [US] ET AL) 4 January 2005 (2005-01-04) * abstract * * column 2, line 5 - line 29 * ----- | 1-14 | |

TECHNICAL FIELDS
SEARCHED      (IPC)

H04W

The present search report has been drawn up for all claims

| Place of search | Date of completion of the search | Examiner |
|---|---|---|
| The Hague | 8 December 2008 | Dionisi, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

..................................................................................................

& : member of the same patent family, corresponding
    document

EPO FORM 1503 03.82 (P04C01)

# EP 2 141 957 A1

**ANNEX TO THE EUROPEAN SEARCH REPORT
ON EUROPEAN PATENT APPLICATION NO.**

EP 08 01 1925

08-12-2008

| Patent document cited in search report | | Publication date | Patent family member(s) | | Publication date |
|---|---|---|---|---|---|
| WO 03102622 | A | 11-12-2003 | AU | 2003240884 A1 | 19-12-2003 |
| | | | CN | 1666111 A | 07-09-2005 |
| | | | EP | 1514130 A1 | 16-03-2005 |
| | | | FI | 20021044 A | 01-12-2003 |
| | | | JP | 3955595 B2 | 08-08-2007 |
| | | | JP | 2005528622 T | 22-09-2005 |
| | | | US | 2007117568 A1 | 24-05-2007 |
| | | | US | 2005128139 A1 | 16-06-2005 |
| US 5293642 | A | 08-03-1994 | CA | 2047253 A1 | 20-06-1992 |
| US 6839560 | B1 | 04-01-2005 | US | 2005096068 A1 | 05-05-2005 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6990428 B
- US 7228136 B1

- US 2005131635 A1

**Non-patent literature cited in the description**

- **Kaemarungsi et al.** Modelling of Indoor Positioning systems based on Location Fingerprinting. *IEEE Infocom,* 2004

- **A. Sayed et al.** Network-based wireless location: challenges faced in developing techniques for accurate wireless location information. *IEEE Signal Processing Magazine,* 2005, vol. 22 (4), 22-40